# EUROPEAN PATENT SPECIFICATION

(11) **EP 0 898 803 B1**
(45) Date of publication and mention of the grant of the patent: **03.01.2001**
(21) Application number: 97929054.1
(22) Date of filing: 14.05.1997
(51) Int. Cl.: H02K 1/27

(54) **A COILED ROTOR COVER FOR AN ELECTRIC MOTOR**
GEWICKELTER ROTORHÜHLKÖRPER FÜR EINEN ELEKTRISCHEN MOTOR
ENVELOPPE DE ROTOR SPIRALEE POUR UN MOTEUR ELECTRIQUE

(30) Priority: 15.05.1996 BR 9601676
(43) Date of publication of application: 03.03.1999
(73) Proprietor: EMPRESA BRASILEIRA DE COMPRESSORES S/A - EMBRACO, CEP-89219-901 Joinville, SC (BR)
(72) Inventor: MÖBIUS, Marcos, Romeu, CEP-89219-901 Joinville, SC (BR)
(74) Representative: Geyer, Werner, Dr.-Ing.
(86) International application number: BR9700018
(87) International publication number: WO9743814

(56) References cited:
- GB-A- 2 117 188
- PATENT ABSTRACTS OF JAPAN vol. 010, no. 065 (E-388), 14 March 1986 (1986-03-14) & JP 60 216753 A (HITACHI SEISAKUSHO KK), 30 October 1985 (1985-10-30)
- PATENT ABSTRACTS OF JAPAN vol. 009, no. 305 (E-363), 3 December 1985 (1985-12-03) & JP 60 141151 A (MATSUSHITA DENKI SANGYO KK), 26 July 1985 (1985-07-26)
- PATENT ABSTRACTS OF JAPAN vol. 018, no. 321 (P-1756), 17 June 1994 (1994-06-17) & JP 06 074956 A (DAINABOTSUTO KK), 18 March 1994 (1994-03-18)

## Description

### Field of the Invention

The present invention refers to a coiled rotor cover for an electric motor, in which the rotor has permament magnets.

### Background of the Invention

Rotors with permanent magnets consist of a cylindrical core, which is usually of laminated or massive iron and around which is seated a plurality of magnets, usually in the form of arched plates, as well as a rotor cover disposed externally to said magnets, in order to keep them close to said core, avoiding relative radial and circumferential displacements between said parts during the motor operation, when the magnets are submitted to centrifugal forces which tend to separate them from the rotor core, to moment (shearing) forces which cause the circumferential displacement of said magnets around the rotor core, and to tensions of thermal origin. Due to these forces, retaining the magnets to the rotor becomes of great importance to determine the efficiency of the motor.

Besides the function of maintaining the magnets close to the rotor core, the cover also avoids the disaggregation and release of magnet fragments resulting from the forces existing thereon, as discussed above.

In a known solution, the rotor cover is in the form of a metallic tube surrounding the magnet-core assembly. Nevertheless, though allowing the magnets to be retained on said core, the use of such covers made of thin material, usually iron, steel, brass, copper, aluminium, etc., has the inconvenience of allowing induced electric currents to appear, resulting in electric losses and consequently in efficiency losses for the motor.

A solution to reduce the effect of these induced currents is to use thin covers obtained from thin steel sheets. However, the thickness reduction required so that said covers do not present a significant electric loss makes difficult the handling thereof during the manufacturing process, besides weakening the cover in its structural function. Moreover, when submitted to continuous long variations of temperature and rotation, due to the operational regimen of the equipment where the rotor is mounted, said covers may suffer irreversible deformations.

Other cover solutions are known, such as forming said covers through coiling, with or without previously tensioning the magnet/rotor core assembly, by using materials such as kevlar fiber, fiberglass, carbon fiber and an adhesive.

An advantage of using coiled covers with these materials is the possibility of adapting said covers to the dimensional variations of the magnets, resulting from their manufacturing process. Nevertheless, though these solutions solve the problem of retaining the magnets to the core and of their dimensional variations, the covers of the materials known in the art are structurally fragile, mainly on what concerns maintaining the integrity of their end portions.

According to the known techniques, the coiled rotor covers for electric motors are obtained by winding (or coiling) a strip or a bundle of fibrous material, which is usually impregnated with resin around the magnet/rotor cover assembly and which is later cured during a certain time and temperature sufficient to obtain the rigidity required by the rotor cover. The covers thus obtained have some inconveniences usually associated with retaining a first end of the bundle of fibrous material being wound, to start said winding, and with maintaining the retention of the ends of the strip of said material during the curing phase and also, later, throughout the useful life of the rotor. In a known solution, the problemas of retaining the strip ends are minimized, by increasing the number of layers of the coiled compound material strip and by initiating and ending the coiling of said material along a portion of the magnet/rotor core assembly which is distant from the ends of said assembly. However, though this solution minimizes the problems regarding the retention of the ends of the cover forming material and also the problems of interruption at the end regions of the magnet/rotor core assembly, the thickness increase of this cover increases the air gap, which reduces the motor efficiency.

### Disclosure of the Invention

Thus, it is an object of the present invention to provide a rotor cover, which is coiled from a bundle of fibers and which, besides minimizing the problem of the strips ends being released, in any production phase of said cover or also during the rotor operation, allows a cover with minimum thickness to be obtained, reducing the air gap in the motor and increasing the reliability of the rotor.

A more specific object is to provide a cover with the above cited characteristics, which is obtained with a single layer of material coiled around the magnet/rotor core assembly.

These and other objectives are attained by a coiled rotor cover for an electric motor, said rotor comprising a rotor core; magnets provided around said core; and a cover, which is coiled on an external cylindrical surface of the magnets from a bundle of fibers, said cover having at least one peripheral end portion comprising an end of the bundle of fibers seated on an annular supporting portion, which is radially extended imwardly in relation to the external cylindrical surface of the magnets, and seated on the adjacent end faces of the magnets, covering, at least partially, a radial extension from outside to inside of said magnet end faces.

### Brief Description of the Drawings

The invention will be described below with reference to the attached drawings, in which:
Figure 1 shows, schematically and in a cross sectional view, a rotor core/magnet/rotor cover assembly of an electric motor;
Figure 2 shows, schematically, partially and in a longitudinal sectional view, a magnet/rotor core assembly surrounded by a cover obtained according to a constructive form of the present invention;
Figure 3 shows, schematically, partially and in a longitudinal sectional view, a magnet/rotor core assembly surrounded by a cover obtained according to another constructive form of the present invention;
Figure 4 shows, schematically, partially and in a longitudinal sectional view, part of a magnet/rotor core assembly surrounded by a cover, according to a constructive variant of the present invention; and
Figures 5, shows, schematically, partially and in a longitudinal sectional view, part of a magnet/rotor core assembly surrounded by a cover, according to another variant of the present invention.

### Best Way of Carrying Out the Invention

The present invention refers to a rotor cover 10 for an electric motor rotor of the type having a rotor core 20, which is to be affixed, surrounding at least part of a rotor shaft and around which are seated magnets 30, usually in the form of arched magnetic plates, which are supported against an external cylindrical surface 21 of the rotor core 20, preferably according to two alignments of longitudinal projections which contact said surface and which are circumferentially spaced from each other, said magnets 30 being retained against the rotor core 20 by the actuation of the rotor cover 10.

According to the present invention, the rotor cover 10 is obtained by the continuous helical coiling of a bundle of fibers, for instance in a compound material, such as kevlar, carbon fiber or fiber glass, aggregated with resin around an external cylindrical surface 31 of the magnets 30, in order to allow the hardening of said cover during its curing phase. It should be understood that the coiling with a bundle of fibers may be achieved in a compound material (a fiber previously impregnated during manufacture or during the coiling process) or with a dry material, with the posterior impregnation of the bundle of fibers with resin.

The present invention allows a rotor cover 10 to be obtained with a lateral wall formed with a minumum number of layers of the compound material bundle of fibers surrounding the magnets 30, said lateral wall being preferably formed by a single layer of the compound material bundle of fibers, in such a way that the air gap originated by said layer affects very little the motor efficiency.

In order to minimize the lateral thickness of the rotor cover 10 of the present invention, without any risk of its ends getting released or weakened, each of said ends of the compound material bundle of fibers is tied off, after a plurality of turns to retain said ends, in a respective peripheral end portion 11 of the rotor cover 10. Though this construction of tying off both ends of the compound material bundle of fibers at the cover peripheral portions is preferred, other solutions where one of said ends is tied off along the cover lateral wall are possible, when said lateral wall is obtained by winding more than one layer of the compound material of its formation, till reaching a determined thickness limit, from which there is defined a significant alteration of the motor efficiency.

Each peripheral end portion 11 is obtained, during the coiling of the bundle of fibers around the magnets 30, by seating said bundle of fibers on an annular supporting surface defined radially extended inwardly in relation to the external cylindrical portion 31 of said magnets 30, preferably covering the whole radial extension, from outside to inside of an adjacent end face 32 of the magnets 30. The peripheral end portion 11 of the cover 10 may, from its design, cover only partially the radial extension from the outside to the inside of the adjacent end face 32 of said magnets 30. Each peripheral end portion 11 has a profile which is defined, on one side, by the profile of the adjacent end face 32 of the magnets 30 and, on the other side, by a mould element 40 which, in a preferred construction, is defined by a finishing end cap.

According to the present invention, the annular supporting surface, which is axially and selectively projected from one of the sides of a plane containing an adjacent end surface 22 of the rotor core, said surface being formed by the end face 32 of the magnets 30, when it is projected towards the magnet/rotor core assembly, and by an adjacent peripheral edge portion 41 of the mould element 40, when it is projected axially spacing itself from the rotor core 20. Though not illustrated, the annular supporting surface can be simultaneously axially spaced apart from both sides of said plane.

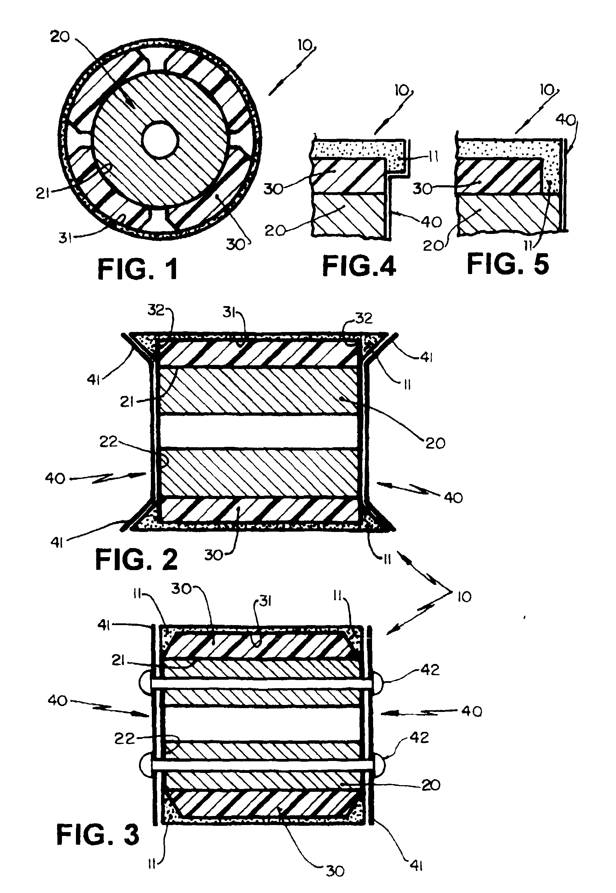

In the constructive form illustrated in figure 2, the annular supporting surface coincides with the peripheral edge portion 41 of the mould element 40, which portion is preferably inclined, axially spacing itself from the rotor core 20.

In the construction illustrated in figure 3, the annular supporting surface coincides with the adjacent end face 32 of the magnets 30 that is preferably totally chamfered, but which may be only partially chamfered.

According to the constructive form illustrated in figure 4, the mould element 40 has a peripheral edge portion defined in a plane which is distinct from that of the central portion of said element, for example, in a plane which is superiorly defined in relation to said central portion plane which is adjacent to a respective end of the rotor core 20, in order to define an annular supporting surface with a rectangular cross-section. In the constructive variant illustrated in figure 5, a similar profile of the annular supporting surface is obtained with a mould element 40 which is flat, but where the magnets 30 have a longitudinal extension which is inferior to that of the rotor core 20, said form of the annular supporting surface being thus obtained adjacent to at least one of the end faces of the magnets 30.

In other constructive forms, not illustrated, the adjacent end face of the magnets 30 have a rectangular or curved profile, which can be similar to the profile shown by the peripheral edge portion 41 of the mould element 40.

In a possible construction, when the mould element 40 takes the form of a finishing cap, the latter is carried by the adjacent peripheral end portion 11 of the rotor cover 10, being retained by said portion during a curing phase of its manufacturing process, when said finishing cap is placed adjacent to a respective end of the magnet 30/rotor cover 20 assembly, prior to the coiling of the compound material strip which forms the cover. In this construction, each finishing cap touches an adjacent end of the rotor core 20, being attached to the latter by an adequate fixation element 42, for example, a rivet or bolt, which fixation can be achieved only regarding the caps in relation to the rotor core 20, or being the fixation itself responsible for maintaining the integrity of the core.

The finishing end caps produce stability to the rotor cover 10 during and after the assembly, transportation and storage, etc., since the impacts and the weight effect itself are applied to the caps and not to the covers, which, besides being thin, are fragile to impacts, since the fibers are very hard and usually breakable.

In one of the solutions of the present invention, each end finishing cap 40 is defined so as to retain an adjacent end of the bundle of fibers of a cover forming material, during the production of said cover, avoiding the release of said ends.

In another construction, the end finishing caps are attached to the rotor cover 10 after they have been coiled with the compound material bundle of fibers and cured.

While in the constructions illustrated the peripheral end portion has a thickness which increases radially from the external cylindrical surface of the rotor core, other constructive forms are possible within the concept presented, such as those having a peripheral end portion 11 obtained with a constant thickness.

## Claims

1. A coiled rotor cover for an electric motor, said rotor comprising a rotor core (20); magnets (30) placed around said core; and a cover (10) which is coiled around an external cylindrical surface (31) of the magnets (30) from a bundle of fibers, characterized in that it has at least one peripheral end portion (11) comprising an end of the bundle of fibers seated on an annular supporting surface (32, 41), which is radially extended inwardly in relation to the external cylindrical surface (31) of the magnets (30), and seated on the adjacent end faces (32) of the magnets (30) covering, at least partially, a radial extension, from outside to inside of said magnet end faces.

2. A coiled rotor cover, as in claim 1, characterized in that the annular supporting surface (32, 41) is axially spaced apart from at least one of the sides of a plane containing the adjacent end surface (21) of the rotor core (20).

3. A coiled rotor cover, as in claim 2, characterized in that the annular supporting surface (32, 41) consists of the adjacent end face (32) of the magnets (30) and the adjacent peripheral edge portion (41) of an end mould element (40).

4. A coiled rotor cover, as in claim 3, characterized in that said end face (32) of the magnets (30) is at least partially chamfered.

5. A coiled rotor cover, as in claim 3, characterized in that said peripheral edge portion (41) of the respective end mould element (40) is inclined, axially spacing itself from the rotor core.

6. A coiled rotor cover, as in claim 3, characterized in that the mould element (40) is defined by a finishing end cap, carried by the adjacent peripheral end portion of the cover.

7. A coiled rotor cover, as in claim 6, characterized in that the finishing end cap has a groove for retaining an adjacent end of the strip during the coiling of the latter around the magnets (30).

8. A coiled rotor cover, as in claim 3, characterized in that the annular supporting surface has a rectangular cross-section.

## Patentansprüche

1. Gewickelter Rotorhüllkörper für einen Elektromotor, wobei der Rotor folgendes umfaßt: einen Rotorkern (20), Magnete (30), die um den Kern herum angeordnet sind, und einen Hüllkörper (10), der aus einem Faserbündel um eine äußere zylindrische Fläche (31) der Magneten (30) gewickelt ist, **dadurch gekennzeichnet**, daß er mindestens einen peripheren Endabschnitt (11) aufweist, der auf einer ringförmigen Stützfläche (32, 41) sitzt, die relativ zur äußeren zylindrischen Fläche (31) der Magneten (30) radial nach hinten versetzt ist und auf den benachbarten Endflächen (32) der Magneten (30) sitzt, wobei er zumindest teilweise eine radiale Erweiterung von der Außen- zur Innenseite der Magnetendflächen bedeckt.

2. Gewickelter Rotorhüllkörper nach Anspruch 1, dadurch gekennzeichnet, daß die ringförmige Stützfläche (32, 41) in Richtung wenigstens einer der Seiten einer Ebene, welche die benachbarte Endfläche (21) des Rotorkerns (20) enthält, axial vorspringt.

3. Gewickelter Rotorhüllkörper nach Anspruch 2, dadurch gekennzeichnet, daß die ringförmige Stützfläche (32, 41) aus dem kleinsten der Teile besteht, die durch die benachbarte Endfläche (32) der Magneten (30) und den benachbarten Umlaufkantenabschnitt (41) eines Endformelementes (40) festgelegt sind.

4. Gewickelter Rotorhüllkörper nach Anspruch 3, dadurch gekennzeichnet, daß die Endfläche (32) der Magneten (30) zumindest teilweise abgeschrägt ist.

5. Gewickelter Rotorhüllkörper nach Anspruch 3, dadurch gekennzeichnet, daß der Umlaufkantenabschnitt (41) des zugeordneten Endformelementes (40) geneigt ist, so daß er in einem axialen Abstand vom Rotorkern verläuft.

6. Gewickelter Rotorhüllkörper nach Anspruch 3, dadurch gekennzeichnet, daß das Formelement (40) durch eine Abschlußendkappe festgelegt ist, die vom benachbarten peripheren Endabschnitt des Hüllkörpers getragen wird.

7. Gewickelter Rotorhüllkörper nach Anspruch 6, dadurch gekennzeichnet, daß die Abschlußendkappe eine Nut zum Halten eines benachbarten Endes des Streifens beim Wickeln des letzteren um die Magneten (30) aufweist.

8. Gewickelter Rotorhüllkörper nach Anspruch 3, dadurch gekennzeichnet, daß die ringförmige Stützfläche einen rechteckigen Querschnitt aufweist.

## Revendications

1. Enveloppe de rotor bobinée pour moteur électrique, ledit rotor comprenant un noyau de rotor (20) ; des aimants (30) placés autour dudit noyau ; et une enveloppe (10) qui est bobinée autour d'une surface cylindrique externe (31) des aimants (30) à partir d'un faisceau de fibres, caractérisée en ce qu'elle comporte au moins une partie d'extrémité périphérique (11) comprenant une extrémité du faisceau de fibres calée sur une surface de support annulaire (32, 41), qui s'étend radialement vers l'intérieur relativement à la surface cylindrique externe (31) des aimants (30), et calée sur les faces d'extrémité adjacentes (32) des aimants (30) couvrant, au moins en partie, une extension radiale de l'extérieur vers l'intérieur desdites faces d'extrémité des aimants.

2. Enveloppe de rotor bobinée selon la revendication 1, caractérisée en ce que la surface de support annulaire (32, 41) est espacée axialement d'au moins un des côtés d'un plan contenant la surface d'extrémité adjacente (21) du noyau de rotor (20).

3. Enveloppe de rotor bobinée selon la revendication 2, caractérisée en ce que la surface de support annulaire (32, 41) consiste en la face d'extrémité adjacente (32) des aimants (30) et la partie de bord périphérique adjacente (41) d'un élément de moule d'extrémité (40).

4. Enveloppe de rotor bobinée selon la revendication 3, caractérisée en ce que ladite face-d'extrémité (32) des aimants, (30) est au moins en partie chanfreinée.

5. Enveloppe de rotor bobinée selon la revendication 3, caractérisée en ce que ladite partie de bord périphérique (41) de l'élément de moule d'extrémité respectif (40) est inclinée, s'espaçant axialement du noyau de rotor.

6. Enveloppe de rotor bobinée selon la revendication 3, caractérisée en ce que l'élément de moule (40) est défini par un bouchon d'extrémité de finition, supporté par la partie d'extrémité périphérique adjacente de l'enveloppe.

7. Enveloppe de rotor bobinée selon la revendication 6, caractérisée en ce que le bouchon d'extrémité de finition comporte une gorge pour retenir une extrémité adjacente de la bande durant l'enroulement de celle-ci autour des aimants (30) .

8. Enveloppe de rotor bobinée selon la revendication 3, caractérisée en ce que la surface de support annulaire a une section transversale rectangulaire.
